# EUROPEAN PATENT APPLICATION

(11) **EP 2 226 985 A1**
(43) Date of publication of application: **08.09.2010**
(21) Application number: 07845853.6
(22) Date of filing: 07.12.2007
(51) Int. Cl.: H04L 29/06

(54) **A METHOD FOR NEGOTIATING THE REDUNDANT TRANSMISSION**

(71) Applicant: ZTE Corporation, Shenzhen, Guangdong 518057 (CN)
(72) Inventor: LI, Xiang, Guangdong 518057 (CN); CHEN, Xiang, Guangdong 518057 (CN)
(74) Representative: Manitz, Gerhart
(86) International application number: PCT/CN2007/003495
(87) International publication number: WO 2009/079810

(57) **Abstract**

The present invention provides a method for negotiating redundant transmission during IP bearer establishment and modification processes, wherein the method of negotiating redundant transmission in the establishment process comprises: an IP bearer control module judges whether a proactive MGW supports redundant transmission; a bearer establishment request tunnel message is carried with redundant transmission parameters and sent to a reactive media gateway of two media gateways; the reactive media gateway resolves the bearer establishment request tunnel message and sends a reactive end bearer establishment request to a RTP/IP protocol processing module via the IP bearer control module, and the IP bearer control module sends a bearer establishment response tunnel message carrying a redundant transmission parameter to the proactive media gateway; and the proactive media gateway sends a proactive end bearer establishment request to the RTP/IP protocol processing module via the IP bearer control module so as to realize a bearer connection between the proactive end media gateway and the reactive end media gateway.

## Description

### Filed of the Invention

The present invention relates to the technical field of communication, more particularly to a method for negotiating redundant transmission during an IP bearer establishment process for two media gateways in circuit domain based on the RFC2198 standard, and a method for negotiating redundant transmission during an IP bearer modification process for two media gateways in circuit domain based on the RFC2198 standard.

### Background of the Invention

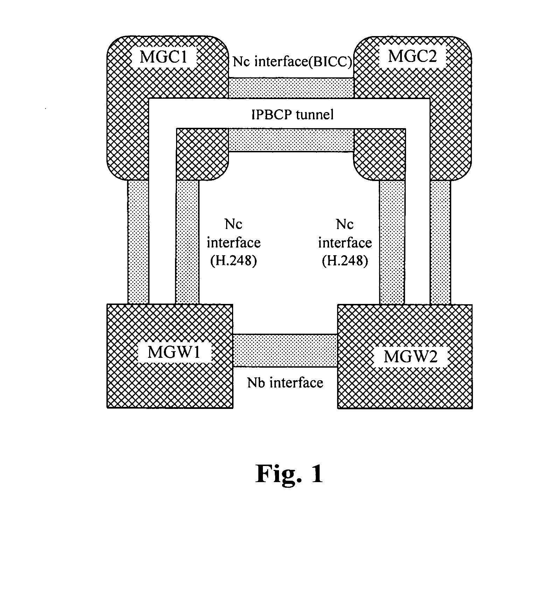

In all the circuit domains of the core networks of the third-generation wireless communication networks (WCDMA, CDMA2000, TD-SCDMA) and the NGN (Next Generation Network), an ideal and a networking mode of separating the bearer and control isolation are used. As shown in Fig. 1, the main network elements are a Media Gateway (MGW) and a Gateway Controller (MGC). The media gateway provides the control functions of media stream, which are mainly bearer establishment and maintenance, connection control, audio encoding process and conversion, and the like. The MGC provides the functions of call control, mobility management, and the like, which mainly include call control process, user authentication, charging, etc. The H.248/Megaco protocol in associates the MGC with the MGW, and is currently the mainstream MGW control protocol. Processes of call establishment, call modification, call release, etc. are controlled by a Bearer Independent Call Control protocol (BICC) between the MGCs. At present, the data transmission on the media plane between the MGWs mostly uses the RTP/IP bearer. IP Bearer control protocol (IPBCP) is the main control protocol for the RTP/IP bearer between the MGWs of the core networks of the WCDMA and the TD-SCDMA, in which the RTP/IP bearer parameters are transmitted between the MGWs via tunnel mechanisms provided by the H.248 and BICC protocols so as to accomplish the bearer control.

Since the IP uses the best effort transmission scheme, a phenomenon of packet loss may be caused due to the network quality in an actual operation. The data loss resulting from the packet loss will degrade the quality of the audio and video for the audio and video calls. For data services, its influence will be greater, possibly resulting in a service failure.

With respect to this problem, the standard organization IETF has established the RFC2198 standard to mitigate the adverse influence caused by the packet loss. The main idea is that the data having been transmitted are retransmitted once for one or several times in the subsequent data transmission. In this way, the lost data packets can be compensated due to the subsequent redundant transmission. The parameters related to the data redundant transmission are indicated by the SDP.

However, since the BICC signaling used for the call management between the MGCs does not have the negotiation capability of the SDP, the negotiation whether the MGW involved in one call supports the RFC2198 and the negotiation of the related parameters can not be conducted between the MGCs. At present, it can only be solved by relying on some methods of manual guarantee. For example, the configuration related to the RFC 2198 capability is set on the related MGWs, which not only reduces the flexibility but also significantly increases the difficulty of the system maintenance. Once the configurations in two MGWs are not consistent with each other, incorrect data transmission will happen.

Since the IPBCP protocol provides a tunnel mechanism in the H.248 and BICC protocols, two interoffice MGWs can send SDP messages to each other so as to achieve the purpose of transmitting bearer-related messages, which also makes it possible to transmit parameters related to the RFC2198 between the MGWs. However, the current IPBCP does not have the capacity for supporting the negotiation of the RFC2198.

### Summary of the Invention

In view of the above mentioned problems, the present invention provides a method for negotiating redundant transmission during an IP bearer establishment process for two MGWs in circuit domain based on the RFC2198 standard and a method for negotiating redundant transmission during an IP modification process for two MGWs in circuit domain based on the RFC2198 standard. By means of the present invention, two interoffice MGWs can send the SDP messages to each other so as to achieve the purpose of transmitting the bearer-related messages, which also makes it possible to transmit the parameters related to the RFC2198 between the MGWs.

According to one aspect of the present invention, a method for negotiating redundant transmission is provided for realizing redundant transmission negotiating during an IP bearer establishment process for two MGW in circuit domain based on the RFC2198 standard, comprising the following steps: S202, when a proactive MGW of the two MGWs initiates an interoffice bearer connection establishment process of the MGWs according to a service requirement, an IP bearer control module judges whether the proactive MGW supports redundant transmission; S204, if the proactive MGW supports the redundant transmission, and the present service needs the redundant transmission, carries a redundant transmission parameter in a bearer establishment request tunnel message, and sends the bearer establishment request tunnel message to a reactive MGW of the two MGWs; S206, upon receiving the bearer establishment request tunnel message, the reactive MGW parses the bearer establishment request tunnel message, and sends a reactive end bearer establishment request to an RTP/IP protocol processing module via the IP bearer control module; S208, after receiving the reactive end bearer establishment request, the RTP/EP protocol control module establishes a reactive end bearer connection, and the IP bearer control module sends a bearer establishment response tunnel message carrying the redundant transmission parameter to the proactive MGW; and S210, after receiving the bearer establishment response tunnel message, the proactive MGW sends a proactive end bearer establishment request to the RTP/EP protocol processing module via the IP bearer control module for establishing a proactive end bearer connection so as to realize a bearer connection between the proactive end MGW and the reactive end MGW.

Before S202, the method further comprises: sets SDP information in the bearer establishment request tunnel message between the two MGWs to be conform to the format requirement of the RFC2198 parameter.

In the present invention, the SDP information at least comprises: a media announcement and a media attribute.

In S206, the following process is further executed: the IP bearer control module judges whether the reactive MGW supports the redundant transmission.

When the reactive MGW supports the redundant transmission, the following processes are executed in S206: upon receiving the bearer establishment request tunnel message, the reactive MGW parses the bearer establishment request tunnel message, and the reactive MGW sends a reactive end bearer establishment request to the RTP/IP protocol processing module via the IP bearer control module, wherein the reactive end bearer establishment request at least includes: an IP address parameter and the redundant transmission parameter in the bearer establishment request tunnel message. Then, in S208, the IP bearer control module returns the bearer establishment request tunnel message as the bearer establishment response tunnel message to the proactive MGW in its original form.

In addition, when the reactive MGW does not support the redundant transmission, the following processes are executed in S206: upon receiving the bearer establishment request tunnel message, the reactive MGW parses the bearer establishment request tunnel message; and the reactive MGW sends a reactive end bearer establishment request to the RTP/IP protocol processing module via the IP bearer control module, wherein the reactive end bearer establishment request at least includes an IP address parameter but does not include the redundant transmission parameter in the bearer establishment request tunnel message.

However, in S208, the IP bearer control module modifies the bearer establishment request tunnel message and removes the redundant transmission parameter; and the IP bearer control module returns the modified bearer establishment request tunnel message as the bearer establishment response tunnel message to the proactive MGW in its original form.

According to another aspect of the present invention, a method for negotiating redundant transmission is also provided for realizing redundant transmission negotiation during an IP bearer modification process for two MGWs in circuit domain based on the RFC2198 standard, comprises the following steps: S402, the IP bearer control module judges whether to modify a function of redundant transmission of the present service according to present service requirement, and the proactive MGW sends a bearer modification request message to the reactive MGW according to the judging result of the IP bearer control module; S404, after receiving the bearer modification request message, the reactive MGW analyses the bearer modification request message, and sends the bearer modification request message to the RTP/IP protocol processing module according to the analysis results; S406, the reactive MGW sends a bearer modification response message to the proactive MGW via the IP bearer control module; and S408, the proactive MGW executes a modification process according to the bearer modification response message, wherein the bearer modification request message and the bearer modification response message carrying the redundant transmission parameter.

Before S402, the present method also includes: judges whether the proactive MGW has the function of redundant transmission.

If the proactive MGW has the function of the redundant transmission, the following processes are executed in S402: when the function of redundant transmission is not turned on in the present service and the IP bearer control module judges that it needs to turn on the function of redundant transmission, the IP bearer control module requires the RTP/IP protocol processing module to turn on the function of redundant transmission; and if it is turned on successfully, the proactive MGW sends the bearer modification request carrying the information of redundant transmission to the reactive MGW, while if it is turned on unsuccessfully, the modification process is ended.

Then, the following processes are executed in S404: after receiving the bearer modification request message, the reactive MGW analyses that the bearer modification request information carries the information of redundant transmission; the IP bearer control module determines whether the reactive MGW supports the function of the redundant transmission; and if the reactive MGW supports the function of redundant transmission, a request for turning on the function of redundant transmission is sent to the RTP/EP protocol processing module, while if does not support, no message is sent to the RTP/IP protocol processing module.

In addition, if the proactive MGW has the function of redundant transmission, the following processes are executed in S402: when the function of redundant transmission is turned on in the present service and the IP bearer control module judges that it does not need to turn on the function of redundant transmission, the proactive MGW sends the bearer modification request without carrying the information of redundant transmission to the reactive MGW.

Then, the following processes are executed in S404: after receiving the bearer modification request message, the reactive MGW analyses that the bearer modification request message does not carry the information of the redundant transmission; and the IP bearer control module sends a request for turning off the function of the redundant transmission to the RTP/IP protocol processing module to turn off the function of redundant transmission.

In the present invention, the following processes are executed specifically in S406: if the bearer modification request message carries the information of redundant transmission and the reactive MGW does not support the function of redundant transmission, the reactive MGW returns a bearer modification response message indicating a refusal to the proactive MGW via the IP bearer control module; if the bearer modification request message carries the information of redundant transmission, and the reactive MGW supports the function of redundant transmission, the reactive MGW returns a bearer modification response message indicating a reception to the proactive MGW via the IP bearer control module; if the bearer modification request message does not carry the information of the redundant transmission and the reactive MGW successfully turns off the function of redundant transmission, the reactive MGW returns a bearer modification response message indicating a reception to the proactive MGW via the IP bearer control model; or if the bearer modification request message does not carry the information of redundant transmission, and the reactive MGW unsuccessfully turns off the function of redundant transmission, the reactive MGW returns a bearer modification response message indicating a refusal to the proactive MGW via the IP bearer control module.

When the bearer modification response message indicating a reception is returned, the following processes are executed in S408: if the present modification process is to turn on the function of redundant transmission, the present modification process is ended; or if the modification process is to turn off the function of redundant transmission, the proactive MGW sends a request for turning off the function of redundant transmission to the RTP/IP protocol processing module for turning off the function of redundant transmission so as to end the present modification process.

Optionally, when the bearer modification response message indicating a refusal is returned, the following processes are executed in S408: if the present modification process is to turn on the function of redundant transmission, the proactive MGW sends a request of turning on the function of redundant transmission to the RTP/IP protocol processing module for turning on the function of redundant transmission so as to end the modification process; or if the present modification process is to turn off the function of redundant transmission, the present modification process is ended.

By means of the present invention, two interoffice MGWs can send the SDP information to each other effectively so as to achieve the purpose of transmitting the bearer-related information, which also makes it possible to transmit parameters related to the RFC2198 between the MGWs.

Other characteristics and advantages of the present invention will be described in the following parts of the description, and moreover, parts of them become obvious from the description, or understood by carrying out the present invention. The purposes and other advantages of the present invention can be realized and obtained by structures particularly mentioned in the description, the claims, and the accompanying drawings.

### Brief Description of the Drawings

The drawings provide a further understanding of the present invention and form a part of the Description. The drawings together with the embodiments of the present invention are used to explain the present invention without unduly limiting the same, wherein:
Fig. 1 is a schematic diagram showing an IPBCP tunnel message mechanism referred to in the present invention;
Fig. 2 is a flow chart showing a method for negotiating redundant transmission according to an aspect of the present invention;
Fig. 3 is a schematic diagram showing a process of negotiating redundant transmission of the RFC2198 during an IP bearer establishment process according to an embodiment of the present invention;
Fig. 4 is a flow chart showing a method for negotiating redundant transmission according to another aspect of the present invention; and
Fig. 5 is a schematic diagram showing a process of negotiating redundant transmission of the RFC2198 during an IP bearer modification process according to an embodiment of the present invention.

### Detailed Description

The preferred embodiments of the present invention will be described hereinafter with reference to the drawings. It will be appreciated that the preferred embodiments described herein are provided only for illustrating and explaining the present invention not for limiting the present invention.

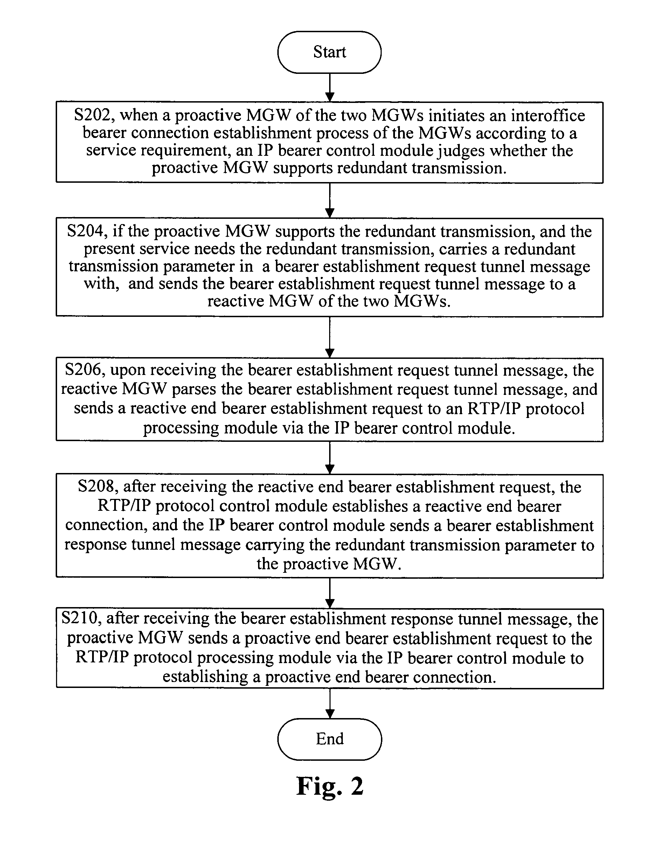

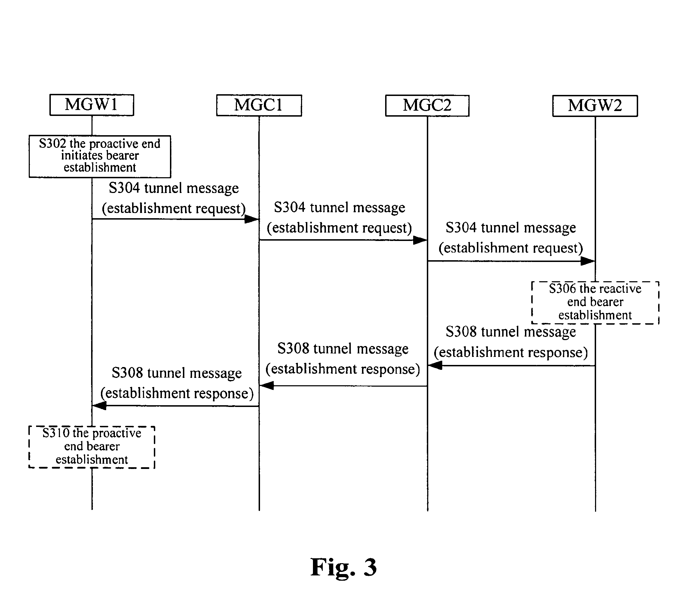

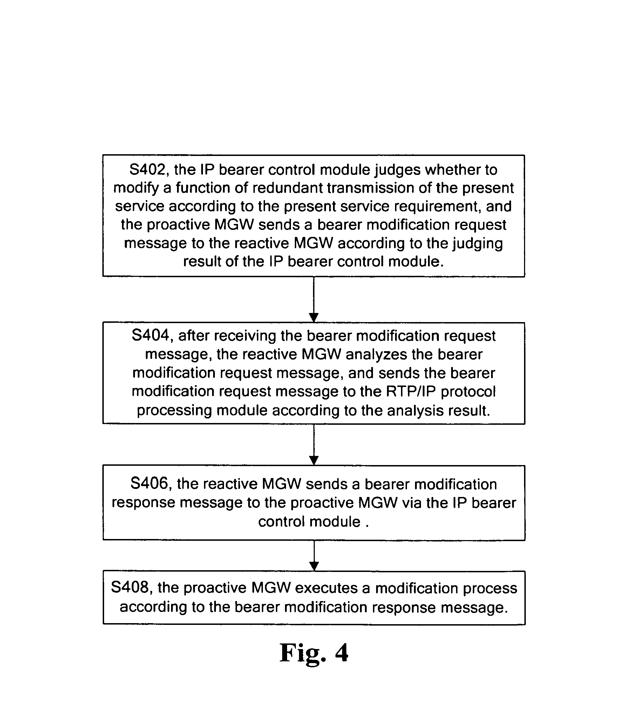

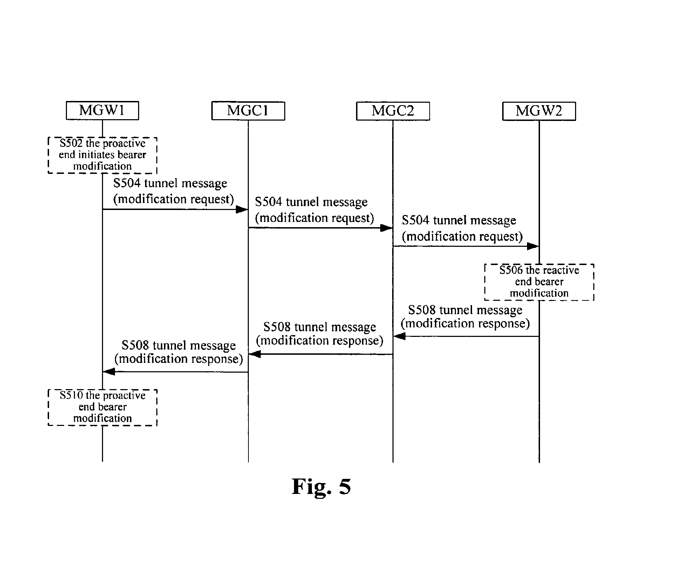

In the present invention, there are mainly involved the following aspects:
1. the IPBCP tunnel message supports the requirements for the SDP format in the RFC2198 (as shown in Fig. 1);
2. the RFC2198 parameter is carried in the tunnel message in an IP bearer establishment process of the IPBCP for negotiation (as shown in Fig. 2 and Fig. 3); and
3. the RFC2198 parameter is carried in the tunnel message in an IP bearer modification process of the IPBCP for negotiation (as shown in Fig. 4 and Fig. 5).

In addition, also involved is that the IPBCP protocol processing part of the MGW sends the negotiated parameter related to the RFC2198 down to an RTP/IP protocol stack for being processed so as to support the corresponding redundant function of the RFC2198.

Fig. 1 is a schematic diagram showing an IPBCP tunnel message mechanism referred to in the present invention. As shown in Fig. 1, the format of the IPBCP tunnel message is defined to realize parameter negotiation of the RFC2198, wherein the format of the SDP information in the IPBCP tunnel message shall first be defined clearly. The information related to the RFC2198 only influences the following parts of the SDP in the IPBCP tunnel message:

### Media announcement

M=<media><port><transport><fmt list>, wherein <fmt list> can be a declaration list of a plurality of the payload type, and the first payload type in the list is a redundant payload type.

### Media attributes

The dynamic payload type in each <fmt list> needs a specification of the media attributes, the format is as follows:
a=rtpmap: <payload><encoding name>/<clock rate>[/<encoding parameters>], wherein <encoding parameters> is an optional item, particularly, the declaration format of the redundant payload type is: a=rtpmap:<redundant payload>red/<clock rate>[/<encoding parameters>].

In addition, it is also required an announcement of a redundant codec priority list needed for supporting the RFC2198:
a=fmtp:<redundant payload><formatl>/<format2>[/<forrnat3>......]
All the <format> above must be announced in the <fmt list> of the media announcement, wherein <format1> is a main codec type of actual media stream, and the rest of the following are codec types of the redundant data.

Fig. 2 is a flow chart showing a method for negotiating redundant transmission according to an aspect of the present invention. As shown in Fig. 2, the following steps are included:
S202, when a proactive MGW of two MGWs initiates an interoffice bearer connection establishment process of the MGWs according to a service requirement, an IP bearer control module judges whether the proactive MGW supports redundant transmission.
S204, if the proactive MGW supports the redundant transmission and the present service needs the redundant transmission, carries a redundant transmission parameter in a bearer establishment request tunnel message, and sends the bearer establishment request tunnel message to a reactive MGW of the two MGWs;
S206, upon receiving the bearer establishment request tunnel message, the reactive MGW parses the bearer establishment request tunnel message, and sends a reactive end bearer establishment request to an RTP/IP protocol processing module via the IP bearer control module.
S208, after receiving the reactive end bearer establishment request, the RTP/IP protocol control module establishes a reactive end bearer connection, and the IP bearer control module sends a bearer establishment response tunnel message carrying the redundant transmission parameter to the proactive MGW;
S210, after receiving the bearer establishment response tunnel message, the proactive MGW sends a proactive end bearer establishment request to the RTP/IP protocol processing module via the IP bearer control module for establishing a proactive end bearer connection so as to realize a bearer connection between the proactive end MGW and the reactive end MGW.

Before S202, the method further comprises: sets the SDP information in the bearer establishment request tunnel message between the two MGWs to be conform to the format requirement of the RFC2198 parameter.

In the present invention, the SDP information at least comprises: a media announcement and a media attribute.

In S206, the following process is further executed: the IP bearer control module judges whether the reactive MGW supports the redundant transmission.

When the reactive MGW supports redundant transmission, the following processes are executed in S206: upon receiving the bearer establishment request tunnel message, the reactive MGW parses the bearer establishment request tunnel message, and the reactive MGW sends a reactive end bearer establishment request to the RTP/IP protocol processing module via the IP bearer control module, wherein the reactive end bearer establishment request at least includes: an IP address parameter and the redundant transmission parameter in the bearer establishment request tunnel message. Then, in S208, the IP bearer control module returns the bearer establishment request tunnel message as the bearer establishment response tunnel message to the proactive MGW in its original form.

In addition, when the reactive MGW does not support the redundant transmission, the following processes are executed in S206: upon receiving the bearer establishment request tunnel message, the reactive MGW parses the bearer establishment request tunnel message, and the reactive MGW sends a reactive end bearer establishment request to the RTP/IP protocol processing module via the IP bearer control module, wherein the reactive end bearer establishment request at least includes: an IP address parameter but does not include the redundant transmission parameter in the bearer establishment request tunnel message.

Then, in S208, the IP bearer control module modifies the bearer establishment request tunnel message and removes the redundant transmission parameter; and the IP bearer control module returns the modified bearer establishment request tunnel message as the bearer establishment response tunnel message to the proactive MGW in its original form.

Fig. 3 is a schematic diagram showing a process of negotiating redundant transmission of the RFC2198 during an IP bearer establishment process according to an embodiment of the present invention. As shown in Fig. 3, the following steps are included:
S302, according to the demand of a call service, the IPBCP of the MGW (proactive MGW) begins to initiate an interoffice RTP/IP bearer establishment of the MGW, reserves the needed resources, and obtains the capacity information as for whether the MGW1 supports the RFC2198 redundant;
S304, if the IPBCP finds the present MGW1 supports the RFC2198 redundant and the present call service needs to make redundancy to ensure transmission, the bearer establishment request tunnel message carries the RFC2198 information, wherein one tunnel message in the WCDMA CN is exemplified as follows:
   v=0
   o=- 0 1 IN IP4 1.2.3.4
   s=0
   c=IN IP4 1.2.3.4
   t=00
   a=ipbcp: 1 Request
   m=audio 1234 RTP/AVP 121 96
   a=rtpmap: 121 red/8000
   a=rtpmap: 96 VND.3GPP.IUFP/16000
   a=fmtp: 121 96/96;

S306, the IPBCP of the MGW2 (reactive MGW) receives the sent tunnel message and then parses the message to find that the opposite end requires the present call to support the RFC2198 redundancy. In this case, the IPBCP first obtains the capacity information of the present MGW to determine whether the MGW supports the redundant function, wherein there are two following processing cases according to the supporting status: 1. the MGW 2 supports the RFC2198 redundancy, the IPBCP sends a request to the RTP/IP protocol process, carrying parameters such as IP addresses and the RFC2198 information carried in the MGW1 tunnel message, and a bearer connection is established; 2. the MGW2 dose not support the RFC2198 redundancy, the IPBCP sends a request to the RTP/IP protocol process, carrying parameters such as IP addresses, a bearer connection is established, and the RFC2198 information is not transmitted.

S308, after the IPBCP successfully requires the RTP/IP protocol process to establish a bearer connection, a response tunnel message is sent to the MGW1, wherein there are two processing cases according to whether the present MGW supports the RFC2198 redundancy.
1. The MGW2 supports the RFC2198 redundancy, the IPBCP sends the received information of the media announcement and the media attributes of the tunnel message in the response tunnel message to the MGW1 in its original form, for example, as for the instance of the request message in ②, the response tunnel message is:
   v=0
   o=-0 1 IN IP4 10. 11. 12. 13
   s=0
   c=IN IP4 10. 11. 12. 13
   t=00
   a=ipbcp: 1 Accept
   m=audio 5678 RTP/AVP 121 96
   a=rtpmap: 121 red/8000
   a= rtpmap:96 VND.3GPP.IUFP/16000
   a=fmtp: 121 96/96
2. The MGW 2 does not support the RFC2198 redundancy, the IPBCP modifies the media announcement and the media attributes in the tunnel message sent by the MGW1, removes the RFC2198 information, and only transmits other codec information together with the response tunnel message back to the MGW1, for example, as for the instance of the request message in ②, the response tunnel message is:
   v=0
   o=-0 1 IN IP4 10. 11. 12. 13
   s=0
   c=IN IP4 10. 11. 12. 13
   t=0 0
   a=ipbcp: 1 Accept
   m=audio 5678 RTP/AVP 96
   a=rtpmap: 96 VND.3GPP.IUFP/16000; and
   S310, the IPBCP of the MGW1 receives a response tunnel message sent by the MGW2.

According to whether the RFC2198 information is carried in the response tunnel message in S310, there are two processing cases:
1. The RFC2198 information is carried in the tunnel message , indicating that the MGW2 supports the RFC2198 redundancy, the IPBCP sends a request to the RTP/IP protocol process, carrying parameters such as IP addresses and the RFC2198 information carried in the MGW2 tunnel message, and a bearer connection is established; and
2. The RFC2198 information is not carried in the tunnel message , indicating that the MGW2 does not support the RFC2198 redundancy, the IPBCP sends a request to the RTP/IP protocol process, carrying parameters such as IP addresses, a bearer connection is established, and the RFC2198 information is not transmitted.

Fig. 4 is a flow chart of a method for negotiating redundant transmission according to another aspect of the present invention. As shown in Fig. 4, the method includes the following steps:
S402, the IP bearer control module judges whether to modify a function of redundant transmission of the present service according to the present service requirement, and the proactive MGW sends a bearer modification request message to the reactive MGW according to the judging result of the IP bearer control module;
S404, after receiving the bearer modification request message, the reactive MGW analyzes the bearer modification request message, and sends the bearer modification request message to the RTP/IP protocol processing module according to the analysis result;
S406, the reactive MGW sends a bearer modification response message to the proactive MGW via the IP bearer control module; and
S408, the proactive MGW executes a modification process according to the bearer modification response message.
   Wherein the bearer modification request message and the bearer modification response message carries the redundant transmission parameter.

Before S402, the present method further includes: judges whether the proactive MGW has the function of redundant transmission.

If the proactive MGW has the function of redundant transmission, the following processes are executed in S402: when the function of redundant transmission is not turned on in the present service and the IP bearer control module judges that it needs to turn on the function of redundant transmission, the IP bearer control module requires the RTP/IP protocol processing module to turn on the function of redundant transmission; if it is turned on successfully, the proactive MGW sends a bearer modification request carrying the information of redundant transmission to the reactive MGW, while if it is turned on unsuccessfully, the modification process is ended.

Then, the following processes are executed in S404: after receiving the bearer modification request message, the reactive MGW analyses that the information of redundant transmission is carried in the bearer modification request message; the IP bearer control module determines whether the reactive MGW supports the function of redundant transmission; and if the reactive MGW supports the function of redundant transmission, a request for turning on a function of redundant transmission is sent to the RTP/IP protocol processing module, while if does not support, no message is sent to the RTP/IP protocol processing module.

In addition, if the proactive MGW has the function of redundant transmission, the following processes are executed in S402: when the function of redundant transmission is turned on in the present service and the IP bearer control module judges that it does not need to turn on the function of redundant transmission, the proactive MGW sends a bearer modification request without carrying the information of redundant transmission to the reactive MGW.

Then, the following processes are executed in S404: after receiving the bearer modification request message, the reactive MGW analyses that the bearer modification request message does not carry the information of redundant transmission; and the IP bearer control module sends a request for turning off the function of redundant transmission to the RTP/IP protocol processing module to turn off the function of redundant transmission.

In the present invention, the following processes are executed specifically in S406: if the bearer modification request message carries the information of redundant transmission and the reactive MGW does not support the function of redundant transmission, the reactive MGW returns a bearer modification response message indicating a refusal to the proactive MGW via the IP bearer control module; if the bearer modification request message carries the information of redundant transmission, and the reactive MGW supports the function of redundant transmission, the reactive MGW returns a bearer modification response message indicating a reception to the proactive MGW via the IP bearer control module; if the bearer modification request message does not carry the information of the redundant transmission and the reactive MGW successfully turns off the function of redundant transmission, the reactive MGW returns a bearer modification response message indicating a reception to the proactive MGW via the IP bearer control model; or if the bearer modification request message does not carry the information of redundant transmission, and the reactive MGW unsuccessfully turns off the function of redundant transmission, the reactive MGW returns a bearer modification response message indicating a refusal to the proactive MGW via the IP bearer control module.

When the bearer modification response message indicating a reception is returned, the following processes are executed in S408: if the present modification process is to turn on the function of redundant transmission, the present modification process is ended; or if the modification process is to turn off the function of redundant transmission, the proactive MGW sends a request for turning off the function of redundant transmission to the RTPIIP protocol processing module for turning off the function of redundant transmission so as to end the present modification process.

Optionally, when the bearer modification response message indicating a refusal is returned, the following processes are executed in S408: if the present modification process is to turn on the function of redundant transmission, the proactive MGW sends a request of turning on the function of redundant transmission to the RTP/IP protocol processing module for turning on the function of redundant transmission so as to end the present modification process; or if the present modification process is to turn off the function of redundant transmission, the present modification process is ended.

Fig. 5 is a schematic diagram showing a process of redundant negotiation of the RFC2198 during an IP bearer modification process according to an embodiment of the present invention. As shown in Fig. 5, the following steps are included:
S502, according to requirements of call services, the IPBCP of the MGW 1 judges that it needs to change the on/off states of the RFC2198 redundant function, initiates an interoffice RTP/IP bearer modification of the MGW, reserves the needed resources, and obtains capability information indicating whether the present MGW supports the RFC 2198 redundancy. There may be not only one case which needs to turn on or off the RFC2198 redundant function. The relatively often happened case is when one call is switched between an audio service and a data service, it needs to turn on or off the redundant function. In addition, since data service is more susceptible to the loss caused by data packet loss, the redundancy is needed for protection. Individual packet loss in audio service does not bring too much influence on a call, generally only resulting in a temporary quality declination. Moreover, since the redundant function can occupy more bandwidth, the redundancy is generally not used. In order to prevent two MGWs from initiating a modification request at the same time, the initiating end for establishing the bearer initiates such a bearer modification in the present invention.

S504, a bearer modification request message is sent according to different cases, wherein if a call does not turn on the RFC2198 redundancy currently, the IPBCP needs to use the redundancy according to the determination, and the present MGW1 supports the RFC2198 function, first requires the RTP/IP protocol process to turn on the redundant function; if it is turned on successfully, the bearer modification request message is sent to the MGW2, carrying the RFC2198 redundant information; and if it is turned on unsuccessfully, the modification process is ended.

In addition, if the call turns on the RFC2198 redundancy currently, and the IPBCP does not need to use the redundancy according to the determination, sends the bearer modification request message to the MGW2 carrying only actual media codec information but without carrying the RFC2198 redundant information;

S506, after the IPBCP of the MGW2 receives the sent tunnel message, there are following different processes based on whether the RFC2198 information is carried: if the tunnel message does not have the RFC2198 information, the IPBCP sends a request to the RTP/IP protocol process to turn off the RFC2198 redundant function; if the tunnel message carries the RFC2198 information, the IPBCP determines the capacity information of the present MGW, and if the present MGW supports the RFC2198 redundancy, a request is sent to the RTP/IP protocol process to turn on the RFC2198 redundant function, if does not support, no action is performed on the RTP/IP protocol process.

S508, there are several following cases as for the IPBCP of the MGW2 sending a response tunnel message to the MGW1: if the tunnel message carries the RFC2198 redundant information in the MGW1, but the MGW2 does not support, or it supports but the modification is not successful, the IPBCP of the MGW2 responds with a tunnel message of Reject to the MGW1; if the tunnel message of the MGW1 carries the RFC2198 redundant information , the MGW2 supports the redundancy and the modification is successful, the IPBCP of the MGW2 responds with a tunnel message of Accept to the MGW1; if the tunnel message of the MGW1 does not carry the RFC2198 redundant information and the MGW2 turns off the redundant function successfully, the IPBCP of the MGW2 responds with a tunnel message of Accept to the MGW1; and if the tunnel message of the MGW1 does not carry the RFC2198 redundant information and however, the MGW2 turns off the redundant function unsuccessfully, the IPBCP of the MGW2 responds with a tunnel message of Reject to the MGW1; and

S510, the IPBCP of the MGW1 receives a response tunnel message sent by the MGW2, different processes are made as follows based on whether the message is Accept or Reject: the tunnel message is "Accept", if the present modification is to turn on the RFC2198 redundant function, the modification process is ended, and if the present modification is to turn off the RFC2198 redundant function, a request for turning off the function is sent to the RTP/IP protocol process, such that the modification process is ended; and the tunnel message is "Reject", if the present modification is to turn on the RFC2198 redundant function, a request for turning off the function is sent to the RTP/IP protocol process, such that the modification process is ended, while if the present modification is changed to turning off the RFC2198 redundant function, the modification process is ended.

It shall be understood that, since turning on the redundant function needs to consume more resources, while turning off the redundant function only results in reduction in resource consumption. Therefore, it is generally considered that to turn on the redundant function is more apt to fail, while to turn off the function will not fail in general. In the two cases of turning on and turning off the redundant function, there is a difference whether to perform turn-on or turn-off operation before sending a tunnel message. The principle is that if it is turned on, it shall be operated as early as possible; if it is turned off, it shall be operated as late as possible.

All in all, in the present invention, two interoffice MGWs can send the SDP information to each other so as to realize the purposes of transmitting the bearer-related information, making it possible to transmit the RFC2198-related parameter between the MGWs, and solving the problem that data redundant mechanism between the MGWs in the circuit domain based on the RFC2198 can not be negotiated between the MGWs.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of protection of the present invention.

## Claims

1. A method for negotiating redundant transmission, for realizing redundant transmission negotiation during an IP bearer establishment process for two Media Gateways, MGWs, in circuit domain based on the RFC2198 standard, **characterized by**, comprising the following steps:
step 1, when a proactive MGW of the two MGWs initiates an interoffice bearer connection establishment process of the MGWs according to a service requirement, an IP bearer control module judging whether the proactive MGW supports redundant transmission;
step 2, if the proactive MGW supports the redundant transmission, and the present service needs the redundant transmission, carrying a redundant transmission parameter in a bearer establishment request tunnel message, and sending the bearer establishment request tunnel message to a reactive MGW of the two MGWs;
step 3, upon receiving the bearer establishment request tunnel message, the reactive MGW parsing the bearer establishment request tunnel message, and sending a reactive end bearer establishment request to an RTP/IP protocol processing module via the IP bearer control module;
step 4, after receiving the reactive end bearer establishment request, the RTP/IP protocol control module establishing a reactive end bearer connection, and the IP bearer control module sending a bearer establishment response tunnel message carrying the redundant transmission parameter to the proactive MGW; and
step 5, after receiving the bearer establishment response tunnel message, the proactive MGW sending a proactive end bearer establishment request to the RTP/IP protocol processing module via the IP bearer control module for establishing a proactive end bearer connection so as to realize a bearer connection between the proactive end MGW and the reactive end MGW.

2. The method according to Claim 1, **characterized by**, before step 1, further comprising:
setting SDP information in the bearer establishment request tunnel message between the two MGWs to be conform to the format requirement of the RFC2198 parameter.

3. The method according to Claim 1, **characterized in that** the SDP information at least comprises:
a media announcement and a media attribute.

4. The method according to Claim 3, **characterized in that** in step 3, the following process is further executed:
the IP bearer control module judging whether the reactive MGW supports the redundant transmission.

5. The method according to Claim 4, **characterized in that** when the reactive MGW supports the redundant transmission, the following processes are executed in step 3:
upon receiving the bearer establishment request tunnel message, the reactive MGW parsing the bearer establishment request tunnel message; and
the reactive MGW sending a reactive end bearer establishment request to the RTP/IP protocol processing module via the IP bearer control module,
wherein the reactive end bearer establishment request at least includes: an IP address parameter and the redundant transmission parameter in the bearer establishment request tunnel message.

6. The method according to Claim 5, **characterized by**, in step 4,
the IP bearer control module returning the bearer establishment request tunnel message as the bearer establishment response tunnel message to the proactive MGW in its original form.

7. The method according to Claim 4, **characterized in that** when the reactive MGW does not support the redundant transmission, the following processes are executed in step 3:
upon receiving the bearer establishment request tunnel message, the reactive MGW parsing the bearer establishment request tunnel message; and
the reactive MGW sending a reactive end bearer establishment request to the RTP/IP protocol processing module via the IP bearer control module,
wherein the reactive end bearer establishment request at least includes an IP address parameter but does not include the redundant transmission parameter in the bearer establishment request tunnel message.

8. The method according to Claim 7, **characterized by**, in step 4,
the IP bearer control module modifying the bearer establishment request tunnel message and removing the redundant transmission parameter; and
the IP bearer control module returning the modified bearer establishment request tunnel message as the bearer establishment response tunnel message to the proactive MGW in its original form.

9. A method for negotiating redundant transmission, for realizing redundant transmission negotiation during an IP bearer modification process for two Media Gateways, MGWs, in circuit domain based on the RFC2198 standard, **characterized by**, comprising the following steps:
step 1, the IP bearer control module judging whether to modify a function of redundant transmission of the present service according to the present service requirement, and the proactive MGW sending a bearer modification request message to the reactive MGW according to the judging result of the IP bearer control module;
step 2, after receiving the bearer modification request message, the reactive MGW analysing the bearer modification request message, and sending the bearer modification request message to the RTP/EP protocol processing module according to the analysis results;
step 3, the reactive MGW sending a bearer modification response message to the proactive MGW via the IP bearer control module; and
step 4, the proactive MGW executing a modification process according to the bearer modification response message,
wherein the bearer modification request message and the bearer modification response message carrying the redundant transmission parameter.

10. The method according to Claim 9, **characterized by**, before step 1, further comprising:
judging whether the proactive MGW has the function of redundant transmission.

11. The method according to Claim 10, **characterized in that** if the proactive MGW has the function of redundant transmission, the following processes are executed in step 1:
when the function of redundant transmission is not turned on in the present service and the IP bearer control module judges that it needs to turn on the function of redundant transmission, the IP bearer control module requiring the RTP/IP protocol processing module to turn on the function of redundant transmission; and
if it is turned on successfully, the proactive MGW sending the bearer modification request carrying the information of redundant transmission to the reactive MGW, while if it is turned on unsuccessfully, ending the modification process.

12. The method according to Claim 11, **characterized in that** in step 2, the following processes are executed :
after receiving the bearer modification request message, the reactive MGW analysing that the bearer modification request information carries the information of redundant transmission;
the IP bearer control module determining whether the reactive MGW supports the function of redundant transmission; and
if the reactive MGW supports the function of redundant transmission, sending a request for turning on the function of redundant transmission to the RTP/IP protocol processing module, if does not support, not sending any message to the RTP/IP protocol processing module.

13. The method according to Claim 10, **characterized in that** if the proactive MGW has the function of redundant transmission, the following processes are executed in step 1:
when the function of redundant transmission is turned on in the present service and the IP bearer control module judges that it does not need to turn on the function of redundant transmission, the proactive MGW sending the bearer modification request without carrying the information of redundant transmission to the reactive MGW.

14. The method according to Claim 13, **characterized in that** in step 2, the following processes are executed:
after receiving the bearer modification request message, the reactive MGW analysing that the bearer modification request message does not carry the information of the redundant transmission; and
the IP bearer control module sending a request for turning off the function of redundant transmission to the RTP/IP protocol processing module to turn off the function of redundant transmission.

15. The method according to any one of Claims 11 to 14, **characterized in that** the following processes are executed in step 3:
if the bearer modification request message carries the information of redundant transmission and the reactive MGW does not support the function of redundant transmission, the reactive MGW returning a bearer modification response message indicating a refusal to the proactive MGW via the IP bearer control module;
if the bearer modification request message carries the information of redundant transmission, and the reactive MGW supports the function of redundant transmission, the reactive MGW returning a bearer modification response message indicating a reception to the proactive MGW via the IP bearer control module;
if the bearer modification request message does not carry the information of redundant transmission and the reactive MGW successfully turns off the function of redundant transmission, the reactive MGW returning a bearer modification response message indicating a reception to the proactive MGW via the IP bearer control model; or
if the bearer modification request message does not carry the information of redundant transmission and the reactive MGW unsuccessfully turns off the function of redundant transmission, the reactive MGW returning a bearer modification response message indicating a refusal to the proactive MGW via the IP bearer control module.

16. The method according to Claim 15, **characterized in that** when the bearer modification response message indicating a reception is returned, the following processes are executed in step 4:
if the present modification process is to turn on the function of redundant transmission, ending the present modification process; or
if the modification process is to turn off the function of redundant transmission, the proactive MGW sending a request for turning off the function of redundant transmission to the RTP/IP protocol processing module for turning off the function of redundant transmission so as to end the present modification process.

17. The method according to Claim 15, **characterized in that** when the bearer modification response message indicating a refusal is returned, the following processes are executed in step 4:
if the present modification process is to turn on the function of redundant transmission, the proactive MGW sending a request of turning on the function of redundant transmission to the RTP/IP protocol processing module for turning on the function of redundant transmission so as to end the modification process; or
if the present modification process is to turn off the function of redundant transmission, ending the present modification process.
